# EUROPEAN PATENT APPLICATION

(11) **EP 4 564 277 A1**
(43) Date of publication of application: **04.06.2025**
(21) Application number: 23845892.1
(22) Date of filing: 01.03.2023
(51) Int. Cl.: G06Q 50/10

(54) **COMPUTER SYSTEM AND STORE SEARCH METHOD**

(30) Priority: 25.07.2022 JP 2022117928
(71) Applicant: Hitachi, Ltd., Tokyo 100-8280 (JP)
(72) Inventor: SATOH Hiroki, Tokyo 100-8280 (JP); MORIKI Toshiomi, Tokyo 100-8280 (JP); FUJIWARA Shuhei, Tokyo 100-8280 (JP)
(74) Representative: Mewburn Ellis LLP
(86) International application number: PCT/JP2023/007581
(87) International publication number: WO 2024/024152

(57) **Abstract**

A computer system stores human relationship information for managing a human relationship and store information for managing a relationship between a store and a person related to the store. The computer system receives a store search request from a terminal operated by a user, specifies a related party having a human relationship with the user with reference to the human relationship information, searches for the store related to the related party with reference to the store information, selects a store to be presented from among the searched stores, and presents the selected store to the user.

## Description

### Cross-Reference to Related Application

The application is based on Japanese Patent Application No. 2022-117928 filed on July 25, 2022, the content of which is incorporated herein by reference.

### Technical Field

The present invention relates to a store search technique for promoting local economic activity.

### Background Art

It is becoming increasingly important to address a declining birthrate and aging society. The decline in a young population in a region leads to a decline in the vitality of the region and ultimately to a decline in the local economy. As a solution to this problem, attempts have been made to introduce local currencies and hold events to revitalize the region.

Local currencies are currencies that can only be used in a specific region. It is expected that the introduction of local currencies will promote local consumption activities and revitalize the local economy. It is also expected that holding events to rediscover the charm of the region will revitalize the local economy.

The introduction of local currencies has a problem of whether the use of stores that are rooted in the region can be promoted. This is because it is expected that increasing consumption at stores that are economically self-contained within the region will have a greater effect on revitalizing the local economy than increasing consumption at franchise stores that exist in a wide area.

PTL 1 discloses that, in order to revitalize the local economy, "when advertising information is received from a store device 4 installed in a store located in a region 1a, an advertising information registration device 2 categorizes and stores the advertising information, and generates and stores coupon information including a distance from the store where the advertising information is registered to a terminal device 3 and benefits according to that distance, and transmits, to the terminal device 3, advertising information common to all terminal devices 3 and coupon information corresponding to the terminal device 3 which is a transmission destination, at a predetermined timing. The terminal device 3 displays a list of stores to a user, and when the user selects a store from among the displayed stores, displays coupon information with advertisements in which the advertising information of the store is added to the coupon information corresponding to the store selected by the user, and executes a process of writing the coupon information with advertisements selected by the user to a mobile terminal 5".

### Citation List

### Patent Literature

PTL 1: JP2013-145520A

### Summary of Invention

### Technical Problem

When the technique disclosed in PTL 1 is used, it is possible to prompt users to use stores by transmitting coupons to the users from local stores.

However, the technique disclosed in PTL 1 imposes a financial burden on stores, such as advertising and providing coupons. For this reason, it is difficult for stores with limited financial resources to implement it. In addition, the effect of increasing consumption activity through advertising and providing coupons tends to be temporary, making it difficult to achieve a sustained effect.

The invention provides a system and method for realizing a service that promotes the use of local stores and supports the revitalization of local economy.

### Solution to Problem

A representative example of the invention disclosed in this application is as follows. That is, a computer system including at least one computer stores human relationship information for managing a human relationship and store information for managing a relationship between a store and a person related to the store, receives a store search request from a terminal operated by a user, specifies a related party having a human relationship with the user with reference to the human relationship information, searches for the store related to the related party with reference to the store information, selects a store to be presented from among the searched stores, and presents the selected store to the user.

### Advantageous Effects of Invention

According to an embodiment of the invention, it is possible to present stores related to people who have a relationship with a user. Thereby, it is possible to revitalize local economic activity. Problems, configurations, and effects other than those described above will become apparent from the following description of examples.

### Brief Description of Drawings

[Fig. 1] Fig. 1 is a diagram showing an example of a configuration of a system of Example 1.
[Fig. 2] Fig. 2 is a diagram showing an example of a hardware configuration of a computer that constitutes the system of Example 1.
[Fig. 3A] Fig. 3A is a diagram showing an example of information stored in a user terminal database of Example 1.
[Fig. 3B] Fig. 3B is a diagram showing an example of information stored in the user terminal database of Example 1.
[Fig. 3C] Fig. 3C is a diagram showing an example of information stored in the user terminal database of Example 1.
[Fig. 3D] Fig. 3D is a diagram showing an example of information stored in the user terminal database of Example 1.
[Fig. 3E] Fig. 3E is a diagram showing an example of information stored in the user terminal database of Example 1.
[Fig. 3F] Fig. 3F is a diagram showing an example of information stored in the user terminal database of Example 1.
[Fig. 3G] Fig. 3G is a diagram showing an example of information stored in the user terminal database of Example 1.
[Fig. 4A] Fig. 4A is a diagram showing an example of information stored in a store terminal database of Example 1.
[Fig. 4B] Fig. 4B is a diagram showing an example of information stored in the store terminal database of Example 1.
[Fig. 4C] Fig. 4C is a diagram showing an example of information stored in the store terminal database of Example 1.
[Fig. 5] Fig. 5 is a flowchart showing an example of a joining process for a support service executed by a user terminal of Example 1.
[Fig. 6] Fig. 6 is a flowchart showing an example of a joining process for the support service executed by the store terminal of Example 1.
[Fig. 7] Fig. 7 is a sequence showing a flow of the support service in the system of Example 1.
[Fig. 8] Fig. 8 is a diagram showing an example of a screen presented on the user terminal of Example 1.
[Fig. 9] Fig. 9 is a diagram showing an example of a screen presented on the store terminal of Example 1.
[Fig. 10] Fig. 10 is a diagram showing an example of a screen presented on the user terminal of Example 1.
[Fig. 11A] Fig. 11A is a flowchart showing an example of a search process executed by a management server of Example 1.
[Fig. 11B] Fig. 11B is a flowchart showing an example of the search process executed by the management server of Example 1.
[Fig. 11C] Fig. 11C is a flowchart showing an example of the search process executed by the management server of Example 1.
[Fig. 12] Fig. 12 is a diagram showing an example of an administrator list generated by the management server of Example 1.
[Fig. 13] Fig. 13 is a diagram showing an example of a candidate store list generated by the management server of Example 1.
[Fig. 14] Fig. 14 is a diagram showing an example of interaction information generated by the management server of Example 1.

### Description of Embodiments

Hereinafter, examples of the invention will be described with reference to the drawings. However, the invention is not limited to the description of the examples shown below. It is easily understood by those skilled in the art that the specific configuration can be changed without departing from the idea or purpose of the invention.

In a configuration of the invention to be described below, the same or similar configurations or functions are denoted by the same reference numerals and signs, and repeated descriptions will be omitted.

In this specification, the notations "first", "second", "third", and the like are used to identify components, and do not necessarily limit the number or order.

### [Example 1]

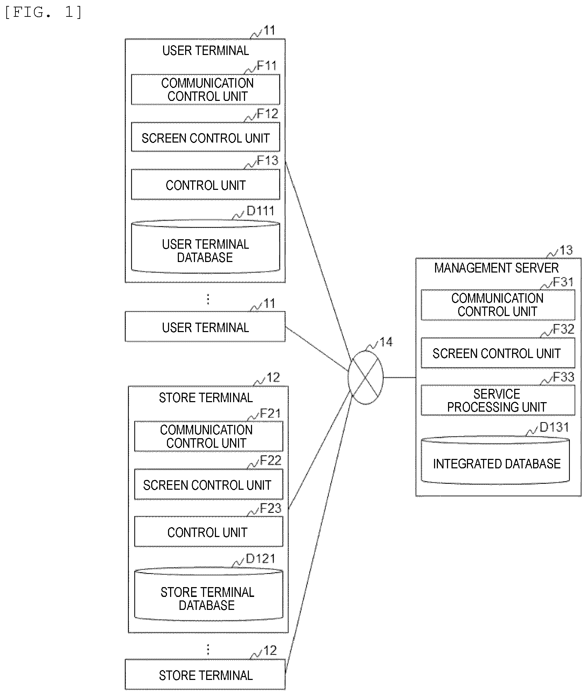

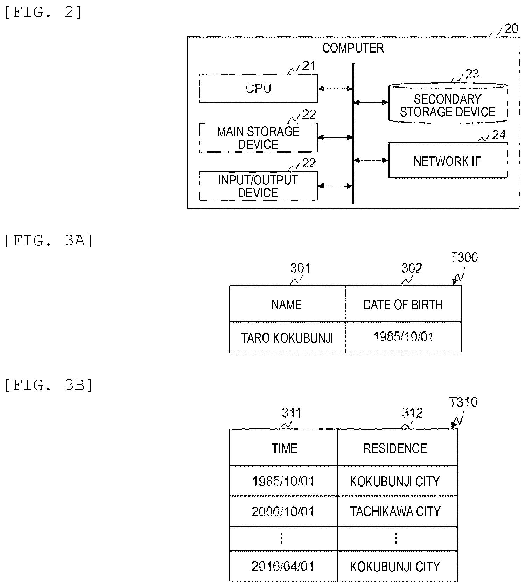

Fig. 1 is a diagram showing an example of a configuration of a system of Example 1. Fig. 2 is a diagram showing an example of a hardware configuration of a computer that constitutes the system of Example 1.

The system includes a plurality of user terminals 11, a plurality of store terminals 12, and a management server 13. The plurality of user terminals 11, the plurality of store terminals 12, and the management server 13 are connected to each other via a network 14 such as a local area network (LAN) and a wide area network (WAN). The network 14 may be connected in either a wired or wireless manner.

The user terminal 11, the store terminal 12, and the management server 13 are implemented, for example, using a computer 20 having the hardware configuration as shown in Fig. 2.

The computer 20 includes a CPU 21, a main storage device 22, a secondary storage device 23, a network interface 24, and an input/output device 25. The hardware elements are connected to each other via a bus.

The CPU 21 executes a program stored in the main storage device 22. The CPU 21 operates as a functional unit (module) that realizes a specific function by executing processing in accordance with the program. In the following description, when processing is described with the functional units as the subjects, it indicates that the CPU 21 is executing a program that implements the functional units.

The main storage device 22 is a memory or the like, and stores programs executed by the CPU 21 and information used by the programs. The secondary storage device 23 is a hard disk drive (HDD), a solid state drive (SSD), or the like, and permanently stores a large amount of data. The programs and information stored in the main storage device 22 may be stored in the secondary storage device 23. In this case, the CPU 21 reads out the programs and information from the secondary storage device 23 and loads them into the main storage device 22.

The network interface 24 communicates with external devices via a network. The input/output device 25 is a device for inputting and outputting information, such as a keyboard, a mouse, a touch panel, and a display.

In this specification, services provided by the management server 13 are referred to as support services. Services provided by the store are simply referred to as services.

The user terminal 11, which is a terminal used by an individual, includes a communication control unit F11, a screen control unit F12, and a control unit F13, and also stores a user terminal database D111.

The communication control unit F11 controls communication with external devices. The screen control unit F12 controls the display of images on the display or the like included in the user terminal 11. The control unit F13 executes processing related to a support service. The user terminal database D111 stores various information related to a user who operates the user terminal 11.

The store terminal 12, which is a terminal owned by the owner of the store that provides a service or a terminal installed in the store, includes a communication control unit F21, a screen control unit F22, and a control unit F23 and also stores a store terminal database D121. The communication control unit F21, the screen control unit F22, and the control unit F23 have the same functions as those of the communication control unit F11, the screen control unit F12, and the control unit F13. The store terminal database D121 stores various information related to the store.

The management server 13, which is a device that provides a support service for promoting local economic activity, includes a communication control unit F31, a screen control unit F32, and a service processing unit F33 and also stores an integrated database D131. The communication control unit F31 and the screen control unit F32 have the same functions as those of the communication control unit F11 and the screen control unit F12. The service processing unit F33 executes processing for realizing a support service. The integrated database D131 stores various information related to users and stores.

The functions of the management server 13 may be realized using a computer system constituted by a plurality of computers 20.

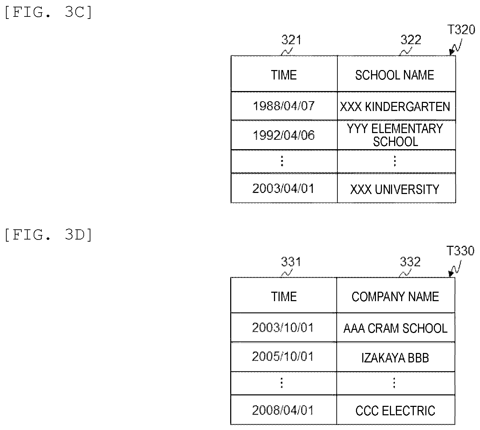

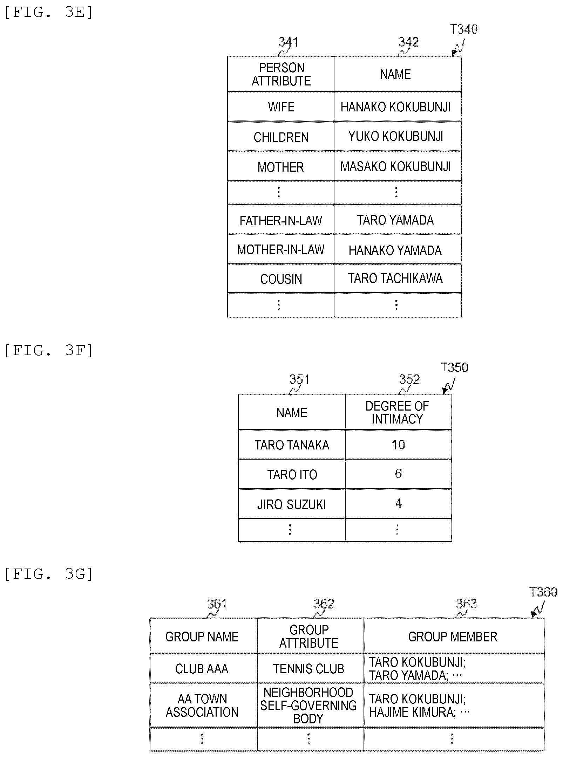

Figs. 3A, 3B, 3C, 3D, 3E, 3F, and 3G are diagrams showing an example of information stored in the user terminal database D111 of Example 1.

A table T300 shown in Fig. 3A is a table for managing basic information of the user who operates the user terminal 11. The table T300 includes a name 301 and a date of birth 302. The attributes included in the table T300 are merely examples and are not limited thereto.

A table T310 shown in Fig. 3B is a table for managing the history of the residence of the user who operates the user terminal 11. The table T310 stores entries including a time 311 and a residence 312. Fields included in the entries are merely examples and are not limited thereto.

A table T320 shown in Fig. 3C is a table for managing the educational history of the user who operates the user terminal 11. The table 320 stores entries including a time 321 and a school name 322. Fields included in the entries are merely examples and are not limited thereto.

A table T330 shown in Fig. 3D is a table for managing the work history of the user who operates the user terminal 11. The table T330 stores entries including a time 331 and a company name 332. The fields included in the entries are merely examples and are not limited thereto.

A table T340 shown in Fig. 3E is a table for managing the relatives of the user who operates the user terminal 11. The table T340 stores entries including a person attribute 341 and a name 342. Fields included in the entries are merely examples and are not limited thereto.

A table T350 shown in Fig. 3F is a table for managing people who have a friendly relationship with the user who operates the user terminal 11. The table 350 stores entries including a name 351 and a degree of intimacy 352. The degree of intimacy is a value indicating the degree of intimacy with the user, and can be set as an integer from 1 to 10, for example. Fields included in the entries are merely examples and are not limited thereto.

A table T360 shown in Fig. 3G is a table for managing groups to which the user who operates the user terminal 11 belongs. The table T360 stores entries including a group name 361, a group attribute 362, and a group member 363. The group member 363 stores the names of people who belong to the group. Fields included in the entries are merely examples and are not limited thereto.

The user terminal database D111 may also include tables for managing a user interaction history.

In the following description, the tables T310, T320, T330, T340, T350, and T360 managed in the user terminal database D111 will be collectively referred to as human relationship information.

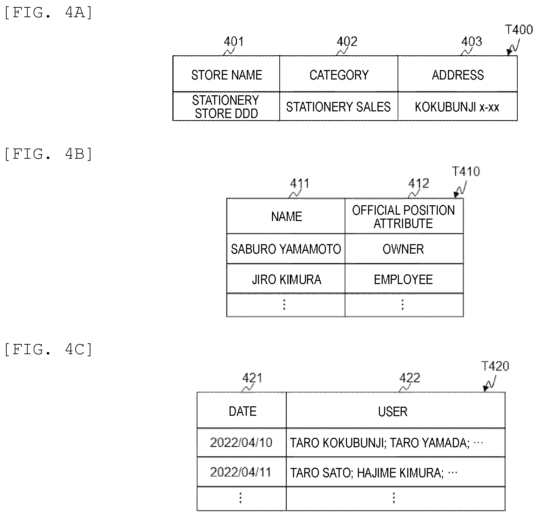

Figs. 4A, 4B, and 4C are diagrams showing an example of information stored in the store terminal database D121 of Example 1.

A table T400 shown in Fig. 4A is a table for managing basic information on the store where a store terminal 12 is installed. The table T400 includes a store name 401, a category 402, and an address 403. The category 402 stores the category of services provided by the store. The attributes included in table T400 are merely examples and are not limited thereto.

A table T410 shown in Fig. 4B is a table for managing the owner and employees of the store where the store terminal 12 is installed. The table T410 stores entries including a name 411 and an official position attribute 412. The official position attribute 412 is a field in which the official position of a person in the store is stored. Fields included in the entries are merely examples and are not limited thereto.

A table T420 shown in Fig. 4C is a table for managing the usage history of the store where the store terminal 12 is installed. The table T420 stores entries including a date 421 and a user 422. The user 422 stores the name of a person who used the store, or a membership number managed uniquely by the store. The fields included in the entries are merely examples and are not limited thereto.

In the following description, the table T400 and the table 410 managed by the store terminal database D121 will be collectively referred to as store information.

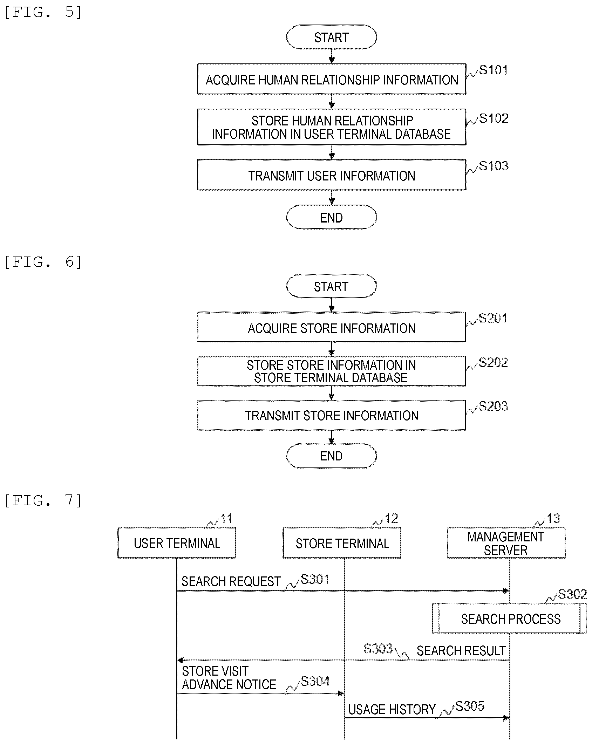

Fig. 5 is a flowchart showing an example of a joining process for a support service executed by the user terminal 11 of Example 1.

The user terminal 11 accesses the management server 13 and transmits a request to join the support service. The management server 13 presents an agreement related to the support service to the user terminal 11, and when the consent of the agreement is obtained from the user terminal 11, the management server 13 presents a screen for inputting human relationship information to the user terminal 11.

The user terminal 11 acquires human relationship information (step S101). When the human relationship information is included in the user terminal database D111, the user terminal 11 acquires the human relationship information from the user terminal database D111. When the human relationship information is included in an external service or external storage, the user terminal 11 acquires the human relationship information from the external service or external storage. When there is insufficient human relationship information, the user terminal 11 displays a screen for prompting the user to input human relationship information.

The external service includes SNS, private services that provide maps, job change information, and the like and administrative services, and the like. It is possible to reduce the effort required to input information in association with the external services and the like.

The user terminal 11 stores the acquired human relationship information in the user terminal database D111 (step S102).

The user terminal 11 transmits the acquired human relationship information to the management server 13 (step S103).

The management server 13 assigns user IDs to the user, the user's related parties, and the like as necessary and generates a user correspondence table in which the user IDs are associated with names. The management server 13 also stores the user correspondence table and the human relationship information associated with the user's user ID in the integrated database D131. The management server 13 also transmits a registration completion notice including the user ID to the user terminal 11.

Data inconsistency can be prevented by storing the same human relationship information in the user terminal database D111 and the integrated database D131.

In addition, information on the current employment may be reflected in the table T410. The management server 13 confirms the fact of employment with a store owner or the like, and adds data to the table T410 corresponding to the store when the fact is confirmed.

Fig. 6 is a flowchart showing an example of a joining process for a support service executed by the store terminal 12 of Example 1.

The store terminal 12 accesses the management server 13 and transmits a request to join the support service. The management server 13 presents an agreement related to the support service to the store terminal 12, and when the consent of the agreement is obtained from the store terminal 12, the management server 13 presents a screen for inputting store information to the store terminal 12.

The store terminal 12 acquires store information (step S201). When the store information is included in the store terminal database D121, the store terminal 12 acquires the store information from the store terminal database D121. When the store information is included in an external service or external storage, the store terminal 12 acquires the store information from the external service or external storage. When there is insufficient store information, the store terminal 12 displays a screen for prompting the store owner or employee to input store information.

The store terminal 12 stores the acquired store information in the store terminal database D121 (step S202).

The store terminal 12 transmits the acquired store information to the management server 13 (step S203). The management server 13 assigns a store ID to the store as necessary, and generates a store correspondence table in which the store ID is associated with the store name. The management server 13 also stores the store correspondence table and the store information associated with the store ID in the integrated database D131. The management server 13 also transmits a registration completion notice including the store ID to the store terminal 12.

It is possible to prevent data inconsistency by storing the same store information in the store terminal database D121 and the integrated database D131.

When the human relationship information and the store information are stored in the integrated database D131, the management server 13 may also associate users with stores. Thereby, it is possible to improve the efficiency of information management and search.

When adding new information or updating registered information, the user terminal 11 and the store terminal 12 store the information in the databases D111 and D121 and then transmit the information to the management server 13.

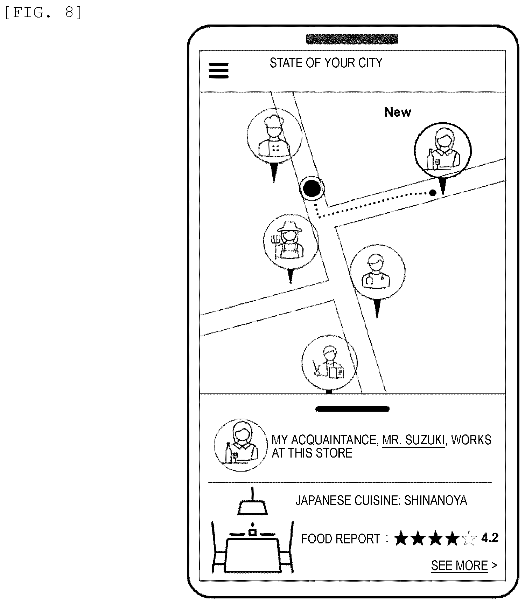

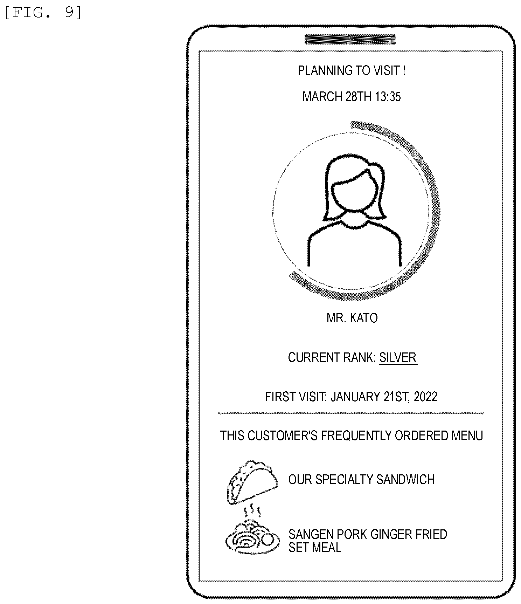

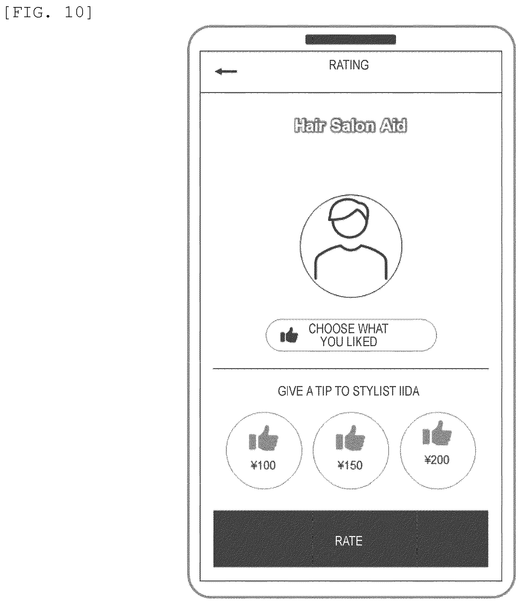

Fig. 7 is a sequence diagram showing a flow of a support service in the system of Example 1. Fig. 8 is a diagram showing an example of a screen presented on the user terminal 11 of Example 1. Fig. 9 is a diagram showing an example of a screen presented on the store terminal 12 of Example 1. Fig. 10 is a diagram showing an example of a screen presented on the user terminal 11 of Example 1.

The user terminal 11 transmits a search request including a user ID, a current location, a current time, a desired store category, and the like to the management server 13 (step S301).

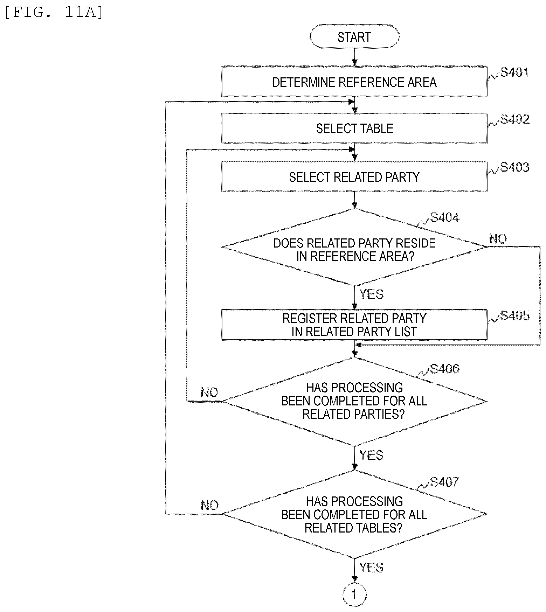

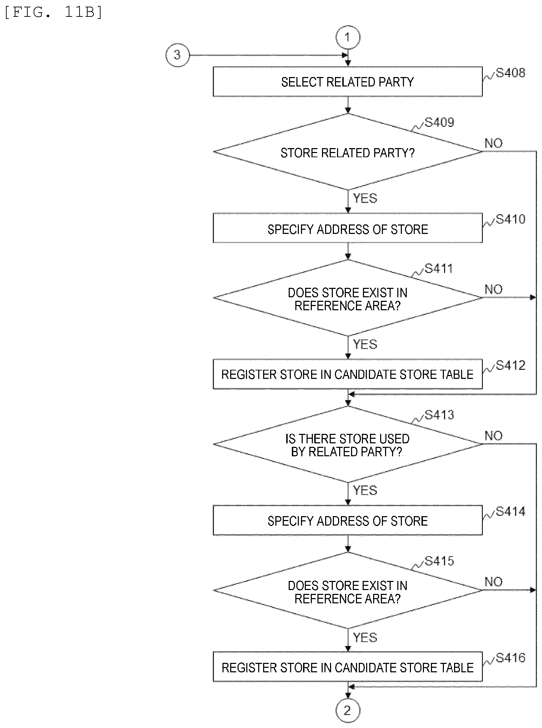

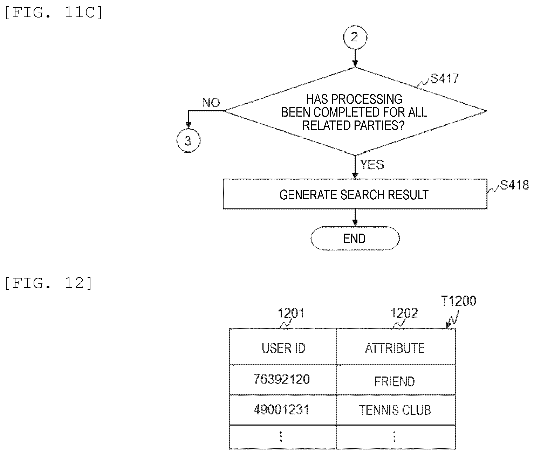

When the management server 13 receives the search request, the management server 13 executes a search process (step S302). Details of the search process will be described using Figs. 11A, 11B, and 11C.

The management server 13 transmits search results to the user terminal 11 (step S303). The search results include, for example, information on the store and the reason for selection. The reason for selecting the store may be, for example, "used by a related party" or "a related party is employed".

Based on the search results, the user terminal 11 displays the screen as shown in Fig. 8. The user selects a store to be used with reference to the information on the store and the reason for selection which are displayed on the screen. At this time, the user terminal 11 transmits a store visit advance notice to the store terminal 12 of the selected store (step S304). The store visit advance notice may be transmitted to the store terminal 12 via the management server 13.

When the store terminal 12 receives the store visit advance notice, the store terminal 12 presents information on the user (membership rank, contents of services to be used) and the planned time of a visit to store employees or the like. For example, the screen as shown in Fig. 9 is displayed. The store terminal 12 may also cooperate with a management system (not shown) of the store to present information on the services provided by the store to the user terminal 11. For example, in the case of a restaurant, a menu and an order form are presented. In addition, it is possible to perform display that matches the user's preferences by using the user's usage history. Thereby, an improvement in the quality of a service provided to the user can be expected.

When the user uses the service, the store terminal 12 stores the usage history in the store terminal database D121 and also transmits the usage history to the management server 13 (step S305).

The management server 13 may present the screen as shown in Fig. 10 to the user terminal 11 as necessary and receive an input related to store evaluation.

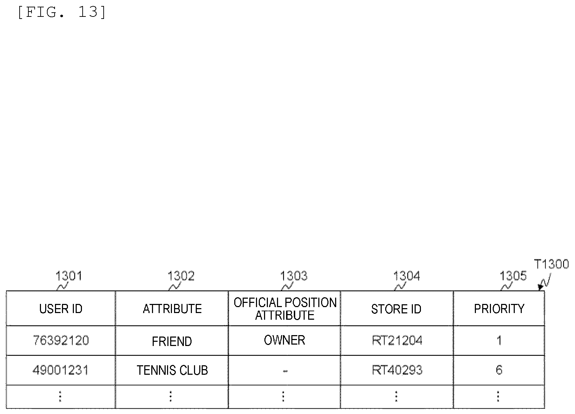

Figs. 11A, 11B, and 11C are flowcharts showing an example of a search process executed by the management server 13 of Example 1. Fig. 12 is a diagram showing an example of an administrator list generated by the management server 13 of Example 1. Fig. 13 is a diagram showing an example of a candidate store list generated by the management server 13 of Example 1.

The management server 13 determines a reference area based on the user's current location (step S401).

Specifically, the management server 13 specifies the user's current residence with reference to the table T310 associated with the user ID. The management server 13 determines whether a distance between the current location and the residence is smaller than a predetermined threshold value. When the distance between the current location and the residence is smaller than the predetermined threshold value, the management server 13 determines an area including the residence (for example, a municipality) as a reference area. When the distance between the current location and the residence is equal to or greater than the predetermined threshold value, the management server 13 determines an area including the current location as a reference area.

The management server 13 selects one table from among the tables T340, T350, and T360 that are managed in association with the user ID (step S402).

The management server 13 selects one related party from among related parties registered in the selected table (step S403).

The management server 13 determines whether the related party resides in the reference area (step S404). Specifically, the following processing is executed.

(S404-1) The management server 13 acquires the user ID of the selected related party with reference to the user correspondence table based on the name of the selected related party. When the user ID of the selected related party does not exist in the user correspondence table, the management server 13 determines that the related party does not reside in the reference area.

(S404-2) The management server 13 specifies the residence of the selected related party with reference to the table T310 associated with the acquired user ID. The management server 13 determines whether the residence of the selected related party is within the reference area.

When the related party does not reside in the reference area, the management server 13 proceeds to step S406.

When the related party resides in the reference area, the management server 13 registers the related party in a related party list 1200 (step S405), and then proceeds to step S406.

The related party list 1200 stores entries including a user ID 1201 and an attribute 1202. In the attribute 1202, a value indicating a relationship between a user and a related party is stored. For example, in the case of a related party selected from the table T340, the value of the person attribute 341 is stored in the attribute 1202, in the case of a related party selected from the table T350, a "friend" is stored in the attribute 1202, and in the case of a related party selected from the table T360, a group attribute of a group to which the related party belongs is stored in the attribute 1202.

In step S405, the management server 13 adds an entry to the related party list 1200, and sets the user ID specified in step S404 to the user ID 1201 of the added entry. The management server 13 also sets a value to the attribute 1202 of the added entry.

In step S406, the management server 13 determines whether processing has been completed for all of the related parties registered in the selected table (step S406).

When processing has not been completed for all of the related parties registered in the selected table, the management server 13 returns to step S403 and executes the same processing.

When processing has been completed for all related parties registered in the selected table, the management server 13 determines whether the processing has been completed for all of the tables T340, T350, and T360 (step S407).

When the processing has not been completed for all of the tables T340, T350, and T360, the management server 13 returns to step S402 and executes the same processing.

Through the processes of step S401 to step S407, related parties who are related to the user and reside in the reference area can be specified. Thereby, it is possible to recommend stores that deepen the relationship between the user and the related parties in the reference area.

The following processing may be added to the processing using the table T340. First, the management server 13 acquires a user ID of a related party (relative) from the user correspondence table, and executes the processes of steps S402 to step S407 using the tables T340, T350, and T360 associated with the user ID. Thereby, it is possible to specify related parties related to the user's relative. The related parties may be limited to only wives and children. The above-described search is expected to revitalize interactions with various people related to the user.

When the processing has been completed for all of the tables T340, T350, and T360, the management server 13 selects one related party from the related party list 1200 (step S408).

The management server 13 determines whether the selected related party is a store related party with reference to the table T410 (step S409). Specifically, the following processing is executed.

(S409-1) The management server 13 searches for the table T410 in which the selected related party is registered, with reference to the integrated database D131.

(S409-2) When there is no table T410 in which the selected related party is registered, the management server 13 determines that the selected related party is not a store related party. When there is the table T410 in which the selected related party is registered, the management server 13 determines that the selected related party is a store related party.

When the selected related party is not a store related party, the management server 13 proceeds to step S413.

When the selected related party is a store related party, the management server 13 specifies an address of the store related to the related party (step S410).

Specifically, the management server 13 searches for the table T400 associated with the store ID based on the store ID associated with the table T410 searched for in step S409, and specifies the address.

The management server 13 determines whether a store related to the related party exists in the reference area (step S411). This is to promote economic activity in the reference area by recommending stores in the reference area.

When a store related to the related party does not exist in the reference area, the management server 13 proceeds to step S413.

When a store related to the related party exists in the reference area, the management server 13 registers the store in a candidate store list 1300 (step S412), and then proceeds to step S413.

The candidate store list 1300 stores entries including a user ID 1301, an attribute 1302, an official position attribute 1303, a store ID 1304, and a priority 1305. The official position attribute 1303 is a field in which the official position of a person in the store is stored. When the person is not a store related party, the official position attribute 1303 is left blank. The priority 1305 is a field in which the priority of a recommendation is stored. In this example, an integer equal to or greater than "1" is stored in the priority 1305. "1" indicates the highest priority, that is, the recommendation is given priority.

In step S412, the management server 13 adds an entry to the candidate store list 1300, and sets the values of the user ID 1201 and the attribute 1202 which are the entries in the related party list 1200 for the user ID 1301 and the attribute 1302 which are the added entries. The management server 13 sets the value of the official position attribute 412 which is the entry searched for from the table T410 in step S409 for the official position attribute 1303 which is the added entry. The management server 13 sets the store ID specified in step S410 for the store ID 1304 which is the added entry. The management server 13 also sets a priority in the priority 1305 which is the added entry based on the official position. For example, when the official position is an "owner", the priority is set to "1", when the official position is a "store manager", the priority is set to "2", and when the official position is other than the "owner" or the "store manager", the priority is set to "3".

In step S413, the management server 13 determines whether there is a store used by a related party (step S413).

Specifically, the management server 13 searches for the table T420 in which the related party is registered with reference to the integrated database D131.

When there is no store used by the related party, the management server 13 proceeds to step S417.

When there is a store used by the related party, the management server 13 specifies the address of the store (step S414).

Specifically, the management server 13 searches for the table T400 associated with the store ID based on the store ID associated with the table T420 searched for in step S413, and specifies the address.

The management server 13 determines whether there is a store used by the related party in the reference area (step S415). This is to promote economic activity in the reference area by recommending stores in the reference area.

When there is no store used by the related party in the reference area, the management server 13 proceeds to step S417.

When there is a store used by the related party in the reference area, the management server 13 registers the store in the candidate store list 1300 (step S416) and then proceeds to step S413.

Specifically, the management server 13 adds an entry to the candidate store list 1300, and sets the values of the user ID 1201 and the attribute 1202 which are the entries in the related party list 1200 for the user ID 1301 and the attribute 1302 which are the added entries. The management server 13 sets the store ID specified in step S414 for the store ID 1304 which is the added entry. The management server 13 also sets a priority for the priority 1305 which is the added entry based on a relationship with the related party. For example, when the related party is a "friend", the priority is set to "4", when the related party is a "group member", the priority is set to "5", and when the related party is other than the "friend" or the "group member", the priority is set to "6".

In step S417, the management server 13 determines whether processing has been completed for all of the related parties registered in the related party list 1200 (step S417).

When processing has not been completed for all of the related parties registered in the related party list 1200, the management server 13 returns to step S408 and executes the same processing.

When processing has been completed for all of the related parties registered in the related party list 1200, the management server 13 generates search results based on the candidate store list 1300 (step S418), and then ends the search process.

Specifically, the management server 13 selects a predetermined number of stores from the candidate store list 1300 and generates display information for displaying the selected stores. The following method is conceivable as a method of selecting stores.

(Method 1) The management server 13 sorts the entries in the candidate store list 1300 based on the priority. The management server 13 selects a predetermined number of stores in descending order of the priority.

(Method 2) The management server 13 may generate a group for each priority and select a predetermined number of stores from each group. The number of stores selected from the group may vary for each priority.

(Method 3) The management server 13 randomly selects a store. Thereby, it is possible to create opportunities to use various stores.

(Method 4) The management server 13 calculates the user's recent (for example, one month) frequency of use based on the table T420 of the stores registered in the candidate store list 1300, and selects a store that has been used less frequently.

When a support service is provided in units of regions, the processes of steps S401, S410, S411, S414, and S415 can be omitted.

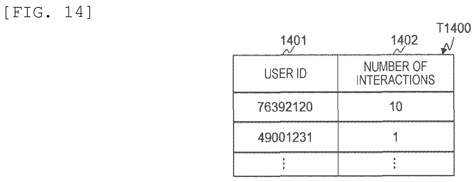

The management server 13 can also totalize information on people who have interacted with the user by using the table T420 of each store and generate interaction information T1400 as shown in Fig. 14. A region and period for which the totalization is performed can be set arbitrarily.

The interaction information T1400 stores entries including a user ID 1401 and the number of interactions 1402. The user ID 1401 is a field in which a user ID of a person who has interacted with a target user is stored. The interaction information T1400 is generated for each user. The pieces of interaction information T1400 of respective users may be collected as one piece of information.

By totalizing the pieces of interaction information T1400 on people who reside in the same area, the degree of human interaction in the area can be quantitatively grasped.

As described above, when a person engages in economic activity, the management server 13 can present local stores related to people with whom the person has formed a human relationship. In addition, stores can improve the quality of their services by grasping users visiting the stores. Thereby, the use of local stores is promoted, thereby revitalizing the local economy. Furthermore, the services can strengthen relation between people and between people and stores, thereby realizing sustainable revitalization of the local economy.

The invention is not limited to the above-described example, and include various modification examples. In addition, for example, the above-described example describes the configuration in detail to describe the invention in an easy-to-understand manner, and is not necessarily limited to having all of the configurations described. In addition, a part of the configuration of each example can be added to, deleted from, or replaced with other configurations.

With regard to the above-described configurations, functions, processing units, and the like, a portion or the entirety thereof may be realized by hardware, for example, by being designed as an integrated circuit. Further, the invention can also be realized by a program code of software for realizing the functions of the example. In this case, a storage medium having the program code recorded thereon is provided to a computer, and a processor included in the computer reads out the program code stored in the storage medium. In this case, the program code itself read out from the storage medium realizes the functions of the above-described example, so that the program code itself and the storage medium having the program code recorded thereon constitute the invention. As the storage medium for supplying such a program code, a flexible disc, a CD-ROM, a DVD-ROM, a hard disk, a solid state drive (SSD), an optical disc, a magneto-optical disc, a CD-R, a magnetic tape, a non-volatile memory card, a ROM, and the like are used.

In addition, the program code for realizing the functions described in this example can be implemented in a wide range of programming or scripting languages, such as Assembler, C/C++, perl, Shell, PHP, Python and Java.

Further, the program code of the software for realizing the functions of the example is distributed through a network, so that the program code may be stored in storage means such as a hard disk or a memory of a computer or a storage medium such as a CD-RW or a CD-R and a processor included in the computer may read out and execute the program code stored in the storage means or the storage medium.

In the above-described example, control lines and information lines are those considered to be necessary for the description, and do not necessarily represent all control lines and information lines in the product. All components may be connected to each other.

## Claims

1. A computer system comprising:
at least one computer, wherein
human relationship information for managing a human relationship and store information for managing a relationship between a store and a person related to the store are stored,
a store search request is received from a terminal operated by a user,
a related party having a human relationship with the user is specified with reference to the human relationship information,
the store related to the related party is searched for with reference to the store information,
a store to be presented is selected from among the searched stores, and
the selected store is presented to the user.

2. The computer system according to claim 1, wherein
history information for managing a usage history of the store is stored, and
the store used by the related party is searched for with reference to the history information.

3. The computer system according to claim 2, wherein
an additional related party having a human relationship with the related party is specified with reference to the human relationship information,
the store related to the additional related party is searched for with reference to the store information, and
the store used by the additional related party is searched for with reference to the history information.

4. The computer system according to claim 3, wherein
a reference area is determined based on the user's residence and current location,
the store to which at least one of the related party and the additional related party is related and which exists in the reference area is searched for, and
the store which is used by at least one of the related party and the additional related party and exists in the reference area is searched for.

5. The computer system according to claim 4, wherein
a priority for controlling an order of display of the store searched for based on the human relationship information is determined based on a relationship between the related party and the store,
the priority of the store searched for based on the history information is determined based on a relationship between the user and the related party, and
a store to be presented from among the searched stores is selected based on the priority.

6. The computer system according to claim 4, wherein
a frequency of use of the searched store by the user is calculated based on the history information, and
a store to be presented is selected from among the searched stores based on the frequency of use of the store.

7. A store search method executed by a computer system including at least one computer, the computer system storing human relationship information for managing a human relationship and store information for managing a relationship between a store and a person related to the store, the store search method comprising:
a first step of causing the at least one computer to receive a store search request from a terminal operated by a user;
a second step of causing the at least one computer to specify a related party having a human relationship with the user with reference to the human relationship information;
a third step of causing the at least one computer to search for the store related to the related party with reference to the store information;
a fourth step of causing the at least one computer to select a store to be presented from among the searched stores; and
a fifth step of causing the at least one computer to present the selected store to the user.

8. The store search method according to claim 7, wherein
the computer system stores history information for managing a usage history of the store, and
the store search method further comprise a sixth step of causing the at least one computer to search for the store used by the related party with reference to the history information.

9. The store search method according to claim 8, wherein
the second step includes causing the at least one computer to specify an additional related party having a human relationship with the related party with reference to the human relationship information,
the third step includes causing the at least one computer to search for the store related to the additional related party with reference to the store information, and
the sixth step includes causing the at least one computer to search for the store used by the additional related party with reference to the history information.

10. The store search method according to claim 9, wherein
the second step includes causing the at least one computer to determine a reference area based on the user's residence and current location,
the third step includes causing the at least one computer to search for the store to which at least one of the related party and the additional related party is related and which exists in the reference area, and
the sixth step includes causing the at least one computer to search for the store which is used by at least one of the related party and the additional related party and exists in the reference area.

11. The store search method according to claim 10, wherein the fourth step includes
causing the at least one computer to determine a priority for controlling an order of display of the store searched for based on the human relationship information based on a relationship between the related party and the store,
causing the at least one computer to determine the priority of the store searched for based on the history information based on a relationship between the user and the related party, and
causing the at least one computer to select a store to be presented from among the searched stores based on the priority.

12. The store search method according to claim 10, wherein the fourth step includes
causing the at least one computer to calculate a frequency of use of the searched store by the user based on the history information, and
causing the at least one computer to select a store to be presented from among the searched stores based on the frequency of use of the store.
